# EUROPEAN PATENT APPLICATION

(11) **EP 4 339 101 A1**
(43) Date of publication of application: **20.03.2024**
(21) Application number: 23175645.3
(22) Date of filing: 26.05.2023
(51) Int. Cl.: B64D 9/00, G01B 11/00, H03K 17/94, H04N 23/55, G06V 10/147

(54) **CARGO CONTAINER SENSOR**

(30) Priority: 31.05.2022 US 202217829103
(71) Applicant: Goodrich Corporation, Charlotte, NC 28217-4578 (US)
(72) Inventor: HARMS, Scott, Ypsilanti, 58497 (US); PAWLICZEK, Carsten, 59556 Lippstadt (DE); HESSLING VON HEIMENDAHL, Andre, 56073 Koblenz (DE)
(74) Representative: Dehns

(57) **Abstract**

A cargo handling system is disclosed herein. The cargo handling system includes a conveyance surface (102) a power drive unit (110) for moving cargo along the conveyance surface (102) where the power drive unit (110) disposed in the conveyance surface (102) and a cargo detector coupled to the power drive unit (110). The cargo detector includes an image sensor having a sensing surface, the sensing surface being oriented towards the cargo, a shutter disposed between the image sensor and the cargo, and a pin hole disposed in the shutter.

## Description

### FIELD

The present disclosure generally relates to cargo container sensors and more specifically to optical cargo container sensors.

### BACKGROUND

Cargo handling system generally have knowledge of cargo container positions and velocities. Current techniques can detect presence of the cargo container and roughly estimate motion of the cargo container. Various ways to overcome these limitations include the use of lidar or vision systems as inputs to the cargo handling system. Vision systems may use an optical sensor in combination with lenses and focus control. Such systems are complex and fragile in a cargo container environment.

### SUMMARY

A cargo handling system is disclosed herein. The cargo handling system includes a conveyance surface a power drive unit for moving cargo along the conveyance surface where the power drive unit disposed in the conveyance surface and a cargo detector coupled to the power drive unit. The cargo detector includes an image sensor having a sensing surface, the sensing surface being oriented towards the cargo, a shutter disposed between the image sensor and the cargo, and a pin hole disposed in the shutter.

In various embodiments, the pin hole as a diameter of about 0.1 mm to about 1 mm. In various embodiments, there is a distance between the image sensor and the pin hole, the distance being about 8 mm to about 12 mm.

In various embodiments, the cargo handling system further includes a light source configured to illuminate the cargo. In various embodiments, the cargo detector is disposed within the power drive unit. In various embodiments, the image sensor is a charge-coupled device. In various embodiments, there is a distance between a top surface of the conveyance surface and the pin hole, the distance being about 15 mm to about 50 mm.

Also disclosed herein is a cargo detector. The cargo detector includes an image sensor being oriented toward the cargo, a shutter disposed between the image sensor and the cargo, and a pin hole disposed in the shutter. In various embodiments, the pin hole has a diameter of about 0.1 mm to about 1 mm. In various embodiments, the image sensor is about 8mm to about 12 mm from the pin hole. In various embodiments, the cargo detector further includes a light source configured to illuminate the cargo.

In various embodiments, the cargo detector further includes a housing for housing the motor, the wheel, and the cargo detector. In various embodiments, the image sensor is a charge-coupled device. In various embodiments, a distance from the cargo to the pin hole is about 15 mm to about 50 mm.

Also disclosed herein is a detector. The detector includes a housing having a first end and an opposing second end, the second end being open, an image sensor disposed in the housing and near the first end, the image sensor configured to capture images through the open second end, a shutter disposed in the housing between the image sensor and the open second end, and a pin hole disposed in the shutter. In various embodiments, the pin hole has a diameter of about 0.1 mm to about 1 mm. In various embodiments, a distance from the image sensor to the pin hole is about 8 mm to about 12 mm.

In various embodiments, the detector further includes a light source coupled to the housing and configured to illuminate a surface exterior to the housing. In various embodiments, a distance from the surface to the pin hole is about 15 mm to about 50 mm. In various embodiments, the image sensor is a charge-coupled device.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate a schematic of an aircraft being loaded and a portion of a cargo handling system, in accordance with various embodiments.
FIG. 2 illustrates a portion of a cargo handling system, in accordance with various embodiments.
FIGS. 3A and 3B illustrate a cargo container detector, in accordance with various embodiments.
FIGS. 4A, 4B, and 4C illustrate images taken using the cargo container detector, in accordance with various embodiments.
FIGS. 5A, 5B, and 5C illustrate images taken using the cargo container detector, in accordance with various embodiments.
FIGS. 6 illustrates images taken using the cargo container detector, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

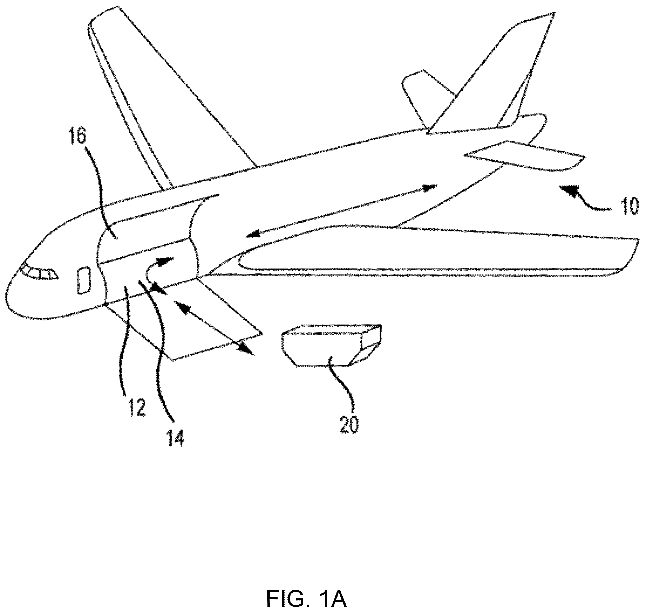

With reference to Figure 1A, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the LTLD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

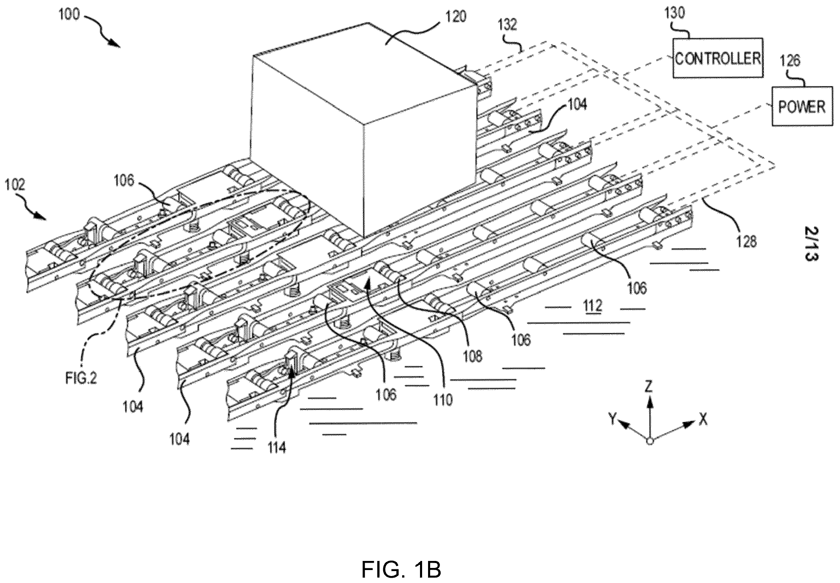

Referring now to Figure 1B, a portion of a cargo handling system 100 is illustrated, in accordance with various embodiments. The cargo handling system 100 is illustrated with reference to an XYZ coordinate system, with the X-direction extending longitudinally and the Z-direction extending vertically with respect to an aircraft in which the cargo handling system 100 is positioned, such as, for example, the aircraft 10 described above with reference to Figure 1A. In various embodiments, the cargo handling system 100 may define a conveyance surface 102 having a plurality of trays 104 supported by a cargo deck 112, such as, for example, the cargo deck 12 described above with reference to Figure 1A. The plurality of trays 104 may be configured to support a unit load device (ULD) 120 (or a plurality of ULDs), such as, for example, the unit load device (ULD) 20 described above with reference to Figure 1A. In various embodiments, the LTLD 120 may comprise a container or a pallet configured to hold cargo as described above. In various embodiments, the plurality of trays 104 is disposed throughout the cargo deck 112 and may support a plurality of conveyance rollers 106, where one or more or all of the plurality of conveyance rollers 106 is a passive roller.

In various embodiments, the plurality of trays 104 may further support a plurality of power drive units (PDUs) 110, each of which may include one or more drive wheels or rollers 108 that may be actively powered by a motor. In various embodiments, one or more of the plurality of trays 104 is positioned longitudinally along the cargo deck 112 - e.g., along the X-direction extending from the forward end to the aft end of the aircraft. In various embodiments, the plurality of conveyance rollers 106 and the one or more drive rollers 108 may be configured to facilitate transport of the ULD 120 in the forward and the aft directions along the conveyance surface 102. During loading and unloading, the ULD 120 may variously contact the one or more drive rollers 108 to provide a motive force for transporting the ULD 120 along the conveyance surface 102. Each of the plurality of PDUs 110 may include an actuator, such as, for example, an electrically operated motor, configured to drive the one or more drive rollers 108 corresponding with each such PDU 110. In various embodiments, the one or more drive rollers 108 may be raised from a lowered position beneath the conveyance surface 102 to an elevated position protruding above the conveyance surface 102 by the corresponding PDU. As used with respect to cargo handling system 100, the term "beneath" may refer to the negative Z-direction, and the term "above" may refer to the positive Z-direction with respect to the conveyance surface 102. In the elevated position, the one or more drive rollers 108 variously contact and drive the ULD 120 that otherwise rides on the plurality of conveyance rollers 106. Other types of PDUs, which can also be used in various embodiments of the present disclosure, may include a drive roller that is held or biased in a position above the conveyance surface by a spring. PDUs as disclosed herein may be any type of electrically powered rollers that may be selectively energized to propel or drive the ULD 120 in a desired direction over the cargo deck 112 of the aircraft. The plurality of trays 104 may further support a plurality of restraint devices 114. In various embodiments, each of the plurality of restraint devices 114 may be configured to rotate downward as the ULD 120 passes over and along the conveyance surface 102. Once the ULD 120 passes over any such one of the plurality of restraint devices 114, such restraint device 114 returns to its upright position, either by a motor driven actuator or a bias member, thereby restraining or preventing the ULD 120 from translating in the opposite direction.

In various embodiments, the cargo handling system 100 may include a system controller 130 in communication with each of the plurality of PDUs 110 via a plurality of channels 132. Each of the plurality of channels 132 may be a data bus, such as, for example, a controller area network (CAN) bus. An operator may selectively control operation of the plurality of PDUs 110 using the system controller 130. In various embodiments, the system controller 130 may be configured to selectively activate or deactivate the plurality of PDUs 110. Thus, the cargo handling system 100 may receive operator input through the system controller 130 to control the plurality of PDUs 110 in order to manipulate movement of the ULD 120 over the conveyance surface 102 and into a desired position on the cargo deck 112. In various embodiments, the system controller 130 may include a general purpose processor, a digital signal processor (DSP), an application specific integrated circuit (ASIC), a field programmable gate array (FPGA) or some other programmable logic device, discrete gate or transistor logic, discrete hardware components, or any combination thereof. The cargo handling system 100 may also include a power source 126 configured to supply power to the plurality of PDUs 110 or to the plurality of restraint devices 114 via one or more power busses 128. The system controller 130 may be complimented by or substituted with an agent-based control system, whereby control of each PDU and associated componentry - e.g., the restraint devices - is performed by individual unit controllers associated with each of the PDUs and configured to communicate between each other.

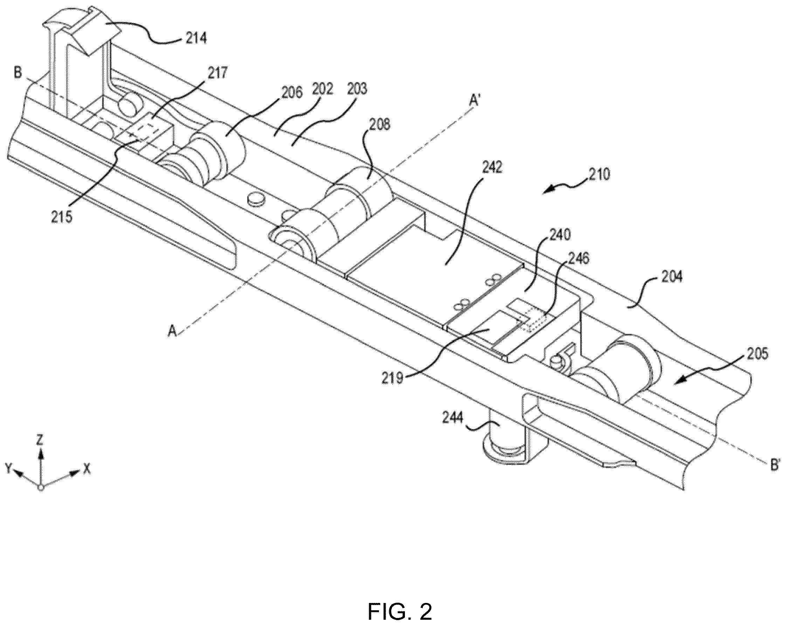

Referring now to Figure 2, a PDU 210, such as for example, one of the plurality of PDUs 110 described above with reference to Figure 1B, is illustrated disposed in a tray 204, in accordance with various embodiments. The PDU 210 may rotate the drive roller 208 in one of two possible directions (e.g., clockwise or counterclockwise) to propel the LTLD in a direction parallel to the longitudinal axis B-B' of the tray 204. The PDU 210 may comprise a unit controller 240, a unit motor 242 and a drive roller 208 mounted within an interior section 205 of the tray 204. The drive roller 208 may comprise a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 (e.g., in the z-direction) of the tray 204. At least partial extension of the drive roller 208 above the conveyance surface 202 facilitates contact between the drive roller 208 and a lower surface of a ULD, such as, for example, the ULD 120 described above with reference to Figure 1B. In various embodiments, the unit controller 240 is configured to control operation of the drive roller 208. The unit controller 240 may include a processor and a tangible, non-transitory memory. The processor may comprise one or more logic modules that implement logic to control rotation and elevation of the drive roller 208. In various embodiments, the PDU 210 may comprise other electrical devices to implement drive logic. In various embodiments, a connector 244 is used to couple the electronics of the PDU 210 to a power source and a system controller, such as, for example, the system controller 130 described above with reference to Figure 1B. The connector 244 may have pins or slots and may be configured to couple to a wiring harness having pin programing. The unit controller 240 may be configured to receive commands from the system controller through the connector 244 in order to control operation of the unit motor 242.

In addition, a restraint device 214, such as, for example, one of the plurality of restraint devices 114 described above with reference to Figure 1B, is illustrated as disposed within the tray 204 and configured to operate between a stowed position, whereby the ULD may pass over the restraint device, and a deployed position (as illustrated), whereby the ULD is restrained or prevented from translation in a longitudinal direction (e.g., along a longitudinal axis B-B') without the restraint device 214 first being returned to the stowed position. The restraint device 214 includes a restraint controller 215 and a restraint motor 217. In various embodiments, the restraint device 214 may be in mechanical communication with the restraint motor 217, which may be, for example, an electromagnetic, electromechanical or electrohydraulic actuator or other servomechanism. In various embodiments, the restraint controller 215 is configured to control operation of the restraint device 214. The restraint controller 215 may include a processor and a tangible, non-transitory memory. The processor may comprise one or more logic modules that implement logic to control operation of the restraint device 214 between the stowed and the deployed positions.

In various embodiments, the PDU 210 may also include a radio frequency identification device or RFID device 246, or similar device, configured to store, transmit or receive information or data - e.g., operational status or location data. Additionally, a LTLD sensor 219 may be disposed within the tray 204 and configured to detect the presence of a ULD as the ULD is positioned over or proximate to the PDU 210 or the restraint device 214. In various embodiments, the ULD sensor 219 may include any type of sensor capable of detecting the presence of a ULD. For example, in various embodiments, the ULD sensor 219 may comprise a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like.

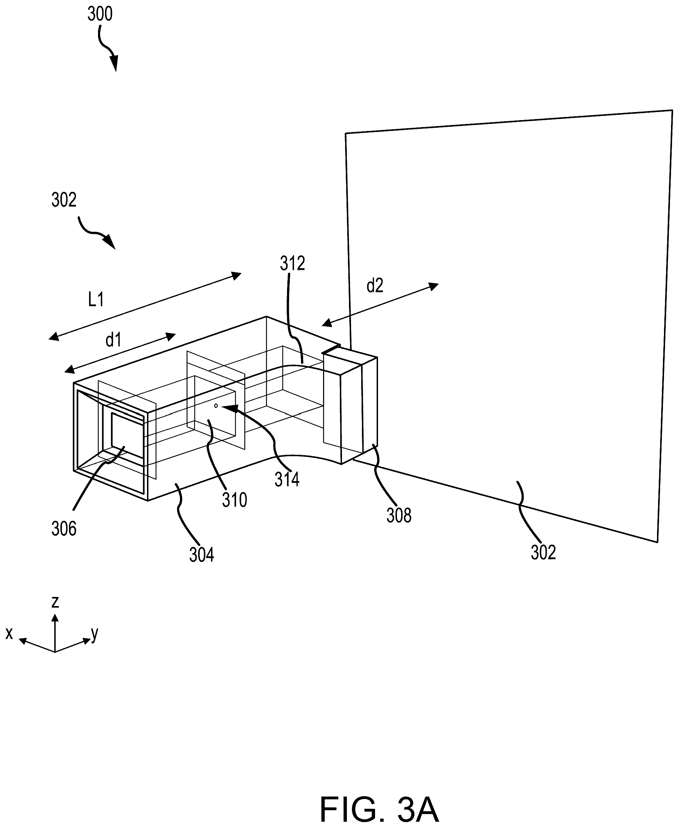

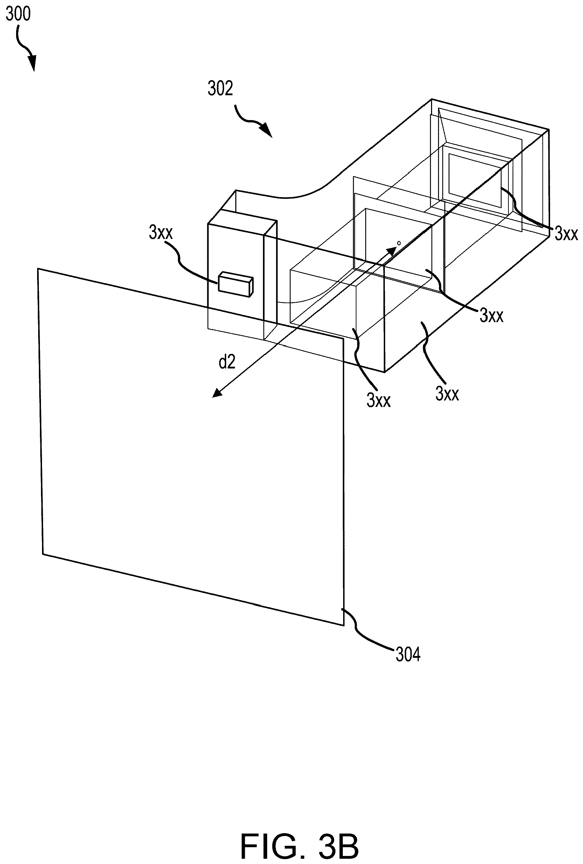

Referring now to FIGS. 3A and 3B, in accordance with various embodiments, illustrated are perspective views of cargo container detector 300. Cargo container detector 300 may be another example of ULD sensor 219, described above. In various embodiments, cargo container detector 300, or detector 300, may be mounted onto a PDU, such as PDU 210. In various embodiments, detector 300 may be installed within PDU 210. In any configuration, detector 300 is configured to be pointed at a cargo container 302. Detector 300 has a housing 304, a sensor 306, and a light source 308. Housing 304 is configured to support sensor 306 and light source 308. Housing includes a shutter 310 that is located between sensor 306 at one end of housing 304 and an opening 312 at the opposite end of housing 304 (e.g., in the y-direction). In various embodiments, a cover lens may be placed over opening 312 to prevent dirt and other debris from entering housing 304 through opening 312.

Sensor 306 may be a reflective sensor such as for example, charge-coupled device (CCD) or another type of image sensor. Sensor 306 has a resolution of about 160x240 pixels to about 2560x1920 pixels and more specifically about 320x480 pixels to about 640x480 pixels. Sensor 306 is sized to fit within PDU 210. In various embodiments, sensor 306 is about 1 mm (0.04 inches) x 0.75 mm (0.03 inches) to about 8 mm (0.31 inches) x 6 mm (0.24 inches) and more specifically about 2 mm (0.08 inches) x 1.5 mm (0.06 inches) to about 4 mm (0.16 inches) x 3 mm (0.12 inches). Sensor 306 has a read-out speed of about 100 frames/s to about 1000 frames/s and more specifically about 125 frames/s to about 200 frames/s. There is tradeoff between sensor size, sensor resolution, and sensor read-out speed that is balanced when selecting a sensor 306 to be used with detector 300.

Light source 308 may include one or more individual LEDs. In the depicted embodiment, light source 308 is mounted to the side of housing 304. In various embodiments, light source 308 may be mounted to the top, bottom, or side of housing 304. In various embodiments, light source 308 may not be mounted to housing 304 but be located near housing 304. The location of light source 308 may be in any position so long as there is minimal back reflection through housing 304 and received by sensor 306.

Shutter 310 includes a pin hole 314 located in the center of shutter 310. Pin hole 314 has a diameter of about 0.05 mm (0.002 inches) to about 1.5 mm (0.059 inches) and more specifically about 0.1 mm (0.004 inches) to about 1 mm (0.039 inches). Shutter 310, and more specifically pin hole 314, is a distance d1 from sensor 306 (e.g., in the y-direction). Distance d1 is about 5 mm (0.19 inches) to about 20 mm (0.79 inches) and more specifically about 8 mm (0.31 inches) to about 12 mm (0.47 inches). Shutter 310 and pin hole 314 function as a camera obscura, focusing light onto sensor 306 for detecting movement of a cargo container without using expensive and fragile lenses and focusing mechanisms. Light enters housing 304 through opening 312, passes through pin hole 314, and strikes sensor 306. An image may then be captured based on the light striking sensor 306.

In the depicted embodiment, housing 304 has a length L1 along the y-axis that is about double distance d1. In various embodiments, length L1 may be about equal to distance d1. Cargo container is a distance d2 from pin hole 314 as it is moved by PDU 210. Distance d2 may be about 10 mm (0.39 inches) to about 100 mm (3.94 inches) and more specifically about 15 mm (0.59 inches) to about 50 mm (1.97 inches). Pin hole 314 at distance d1 and cargo container at distance d2 allow sensor 306 to detect variations in the surface of cargo container 302. For example, while cargo container 302 may appear smooth there are many small variations in the surface of cargo container such as dings, scratches, discolorations, etc. that may be used to determine whether cargo container 302 is moving and how fast cargo container 302 is moving. Generally, current cargo handling systems, such as cargo handling system 100, are configured to move cargo containers up to about 0.3 m/s (1 foot/s) with future systems being up to about 1 m/s (3.3 feet/s). Detector 300 as described herein is capable of detecting position and motion at the current speeds of cargo container systems as well as with the future speeds cargo container systems.

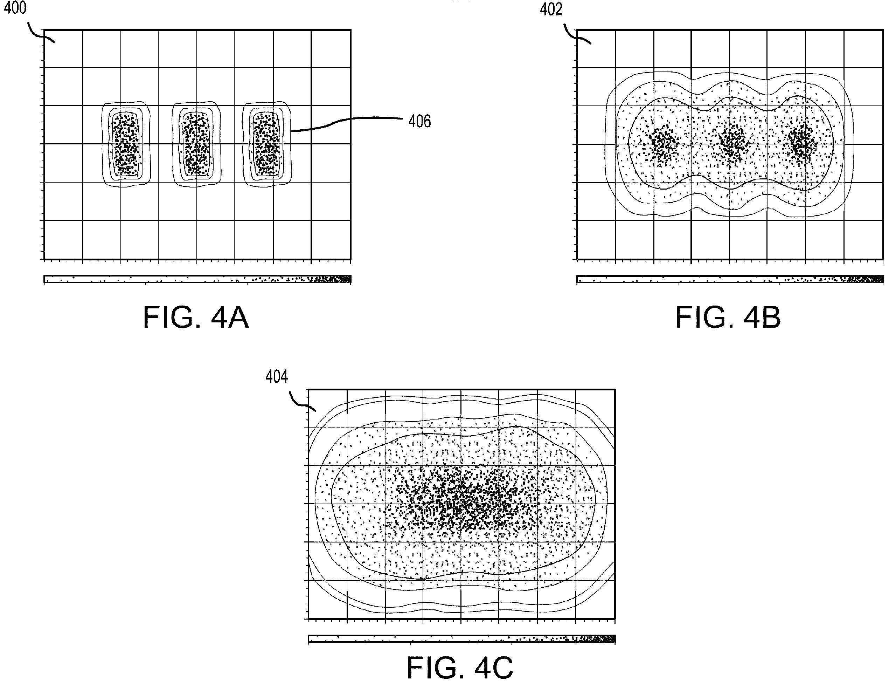

Referring now to FIGS. 4A-4C, in accordance with various embodiments, illustrated are images 400, 402, and 404 taken by detector 300 described above with respect to FIGS. 3A and 3B. Images 400, 402, and 404 demonstrate the effectiveness of detector 300 under various conditions using three dummy objects 406. Each dummy object is about 0.5 x 1.0 mm (0.02 x 0.04 inches) with 0.5 mm (0.02 inches) gap between each object. Dummy objects 406 simulate a scratch, indentation, or particle, among others, that may be present on cargo container 302. Detector 300 uses sensor 306 having a resolution of about 640x480 pixels for each of image 400, 402, and 404.

Referring to FIG. 4A, detector 300 includes a pin hole 314 having a diameter of about 0.1 mm (0.004 inches). Dummy objects 406 are about 10.8 mm (0.425 inches) from pin hole 314. In this configuration, sensor 306 is able to provide image 400 in which dummy objects 406 are clearly identifiable. Image 400 may be used to detect direction of movement and speed of movement using detector 300.

Referring to FIG. 4B, detector 300 includes a pin hole 314 having a diameter of about 0.5 mm (0.02 inches). Dummy objects 406 are about 10.8 mm (0.425 inches) from pin hole 314. In this configuration, sensor 306 is able to provide image 402 in which dummy objects 406 are somewhat identifiable. Image 402 may be used to detect direction of movement and speed of movement.

Referring to FIG. 4C, detector 300 includes a pin hole 314 having a diameter of about 1.0 mm (0.04 inches). Dummy objects 406 are about 10.8 mm (0.425 inches) from pin hole 314. In this configuration, sensor 306 is able to provide image 404 in which dummy objects 406 are not identifiable as separate objects. While it may be possible to use image 404 to detect direction of movement and speed of movement, it may not be reliable.

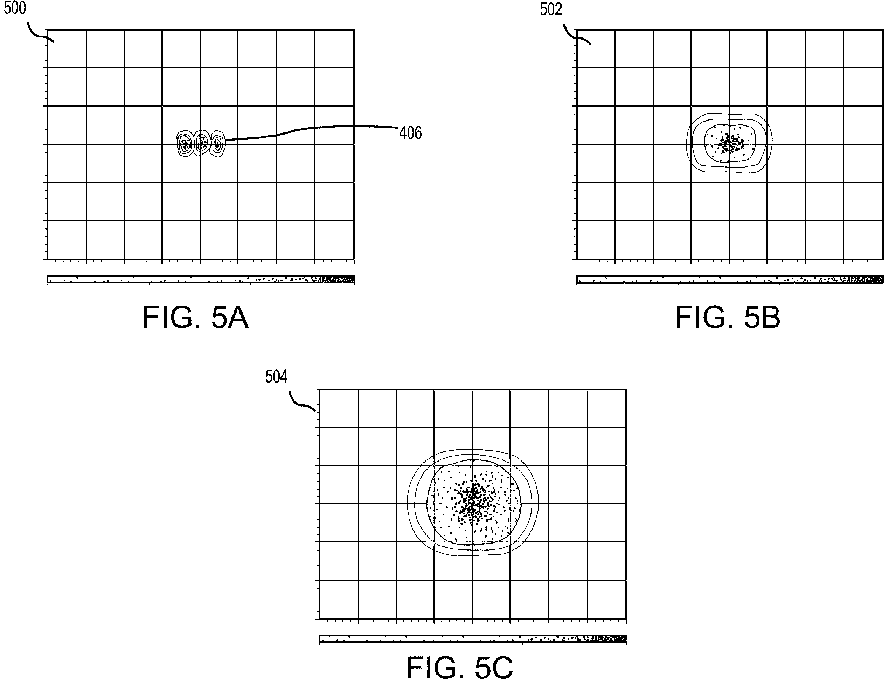

Referring now to FIGS. 5A-5C, in accordance with various embodiments, illustrated are images 500, 502, and 504 taken by detector 300 described above with respect to FIGS. 3A and 3B. Images 500, 502, and 504 demonstrate the effectiveness of detector 300 under various conditions using three dummy objects 406, as described above with respect to FIGS. 4A-4C. Detector 300 uses sensor 306 having a resolution of about 640x480 pixels for each of image 400, 402, and 404.

Referring to FIG. 5A, detector 300 includes a pin hole 314 having a diameter of about 0.1 mm (0.004 inches). Dummy objects 406 are about 48 mm (1.89 inches) from pin hole 314. In this configuration, sensor 306 is able to provide image 500 in which dummy objects 406 are identifiable. Image 500 may be used to detect direction of movement and speed of movement using detector 300.

Referring to FIG. 5B, detector 300 includes a pin hole 314 having a diameter of about 0.5 mm (0.02 inches). Dummy objects 406 are about 48 mm (1.89 inches) from pin hole 314. In this configuration, sensor 306 is able to provide image 502 in which dummy objects 406 are somewhat identifiable. While it may be possible to use image 502 to detect direction of movement and speed of movement, it may not be reliable.

Referring to FIG. 4C, detector 300 includes a pin hole 314 having a diameter of about 1.0 mm (0.04 inches). Dummy objects 406 are about 48 mm (1.89 inches) from pin hole 314. In this configuration, sensor 306 is able to provide image 504 in which dummy objects 406 are not identifiable as separate objects. While it may be possible to use image 504 to detect direction of movement and speed of movement, it may not be reliable.

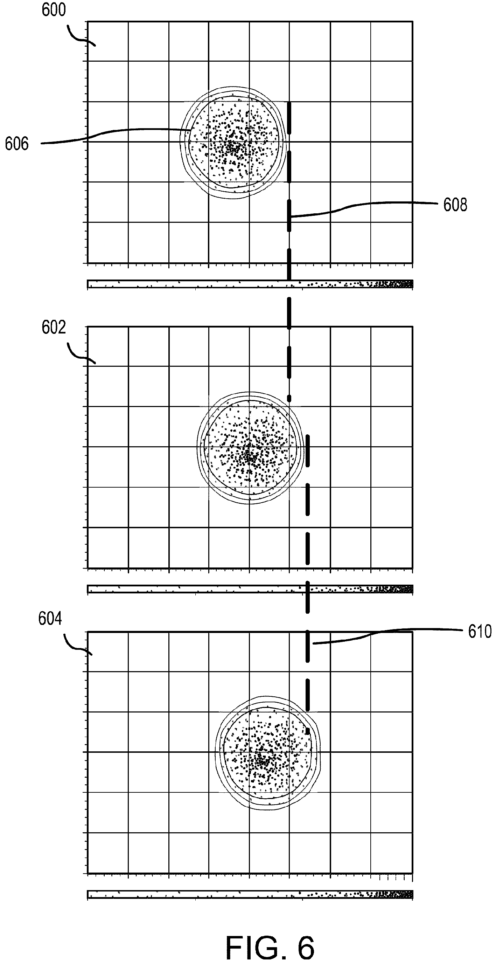

Referring now to FIG. 6, in accordance with various embodiments, illustrated are images 600, 602, and 604 taken by detector 300 as described above with respect to FIGS. 3A and 3B. Images 600, 602, and 604 demonstrate the effectiveness of detector 300 at detecting movement using a dummy object 606 that is about 1.0 x 0.5 mm (0.04 x 0.02 inches). Detector 300 uses sensor 306 having a resolution of about 640x480 pixels for each of image 400, 402, and 404. Pin hole 314 is about 1.0 mm (0.04 inches). Dummy object 606 is about 48 mm (1.89 inches) from pin hole 314. Images 600, 602, and 604 are taken at different points in time to capture movement of dummy object 606 from left to right, as illustrated. Vertical lines 608 and 610 are included to identify motion of dummy object (e.g., left to right). Vertical line 608 is in line with the leading surface of dummy object 606 in image 600. Vertical line 610 is in line with the leading surface of dummy object 606 in image 602. As shown, detector 300 is able to capture motion of dummy object 606.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A cargo handling system, comprising:
a conveyance surface (102);
a power drive unit (110) for moving cargo along the conveyance surface (102), the power drive unit (110) disposed in the conveyance surface (102); and
a cargo detector coupled to the power drive unit (110), the cargo detector including:
an image sensor having a sensing surface, the sensing surface configured to be oriented toward the cargo;
a shutter disposed in relation to the image sensor to be between the image sensor and the cargo; and
a pin hole disposed in the shutter.

2. The cargo handling system of claim 1, wherein the pin hole as a diameter of about 0.1 mm to about 1 mm.

3. The cargo handling system of claim 1 or 2, wherein there is a distance between the image sensor and the pin hole, the distance being about 8 mm to about 12 mm.

4. The cargo handling system of any preceding claim, further comprising:
a light source configured to illuminate the cargo.

5. The cargo handling system of any preceding claim, wherein the cargo detector is disposed within the power drive unit (110).

6. The cargo handling system of any preceding claim, wherein the image sensor is a charge-coupled device.

7. The cargo handling system of any preceding claim, wherein there is a distance between a top surface of the conveyance surface (102) and the pin hole, the distance being about 15 mm to about 50 mm.

8. A cargo detector, comprising:
an image sensor configured to be oriented toward cargo;
a shutter disposed in relation to the image sensor to be between the image sensor and the cargo; and
a pin hole disposed in the shutter.

9. The cargo detector of claim 8, wherein the pin hole has a diameter of about 0.1 mm to about 1 mm.

10. The cargo detector of claim 8 or 9, wherein the image sensor is about 8mm to about 12 mm from the pin hole.

11. The cargo detector of any of claims 8 to 10, further comprising:
a light source configured to illuminate the cargo, and/or further comprising:
a housing for housing the motor, the wheel, and the cargo detector.

12. The cargo detector of any of claims 8 to 11, wherein the image sensor is a charge-coupled device, and/or wherein a distance from the cargo to the pin hole is about 15 mm to about 50 mm.

13. A detector, comprising:
a housing having a first end and an opposing second end, the second end being open;
an image sensor disposed in the housing and near the first end, the image sensor configured to capture images through the open second end;
a shutter disposed in the housing between the image sensor and the open second end; and
a pin hole disposed in the shutter.

14. The detector of claim 13, wherein the pin hole has a diameter of about 0.1 mm to about 1 mm, and/or . wherein a distance from the image sensor to the pin hole is about 8 mm to about 12 mm.

15. The detector of claim 13 or 14, further comprising:
a light source coupled to the housing and configured to illuminate a surface exterior to the housing, and optionally wherein a distance from the surface to the pin hole is about 15 mm to about 50 mm, and/or wherein the image sensor is a charge-coupled device.
